# EUROPÄISCHE PATENTSCHRIFT

(11) **EP 1 781 109 B1**
(45) Veröffentlichungstag und Bekanntmachung des Hinweises auf die Patenterteilung: **17.07.2013**
(21) Anmeldenummer: 05777015.8
(22) Anmeldetag: 19.08.2005
(51) Int. Cl.: A21C 11/10

(54) **VORRICHTUNG ZUM HERSTELLEN VON POLSTERFÖRMIGEN, VORZUGSWEISE GEFÜLLTEN HOHLKÖRPERN**
DEVICE FOR PRODUCING CUSHION-SHAPED, PREFERABLY FILLED HOLLOW BODIES
DISPOSITIF POUR PRODUIRE DES CORPS CREUX EN FORME DE COUSSINS QUI SONT DE PREFERENCE FOURRES

(30) Priorität: 23.08.2004 AT 14172004; 21.07.2005 AT 12282005
(43) Veröffentlichungstag der Anmeldung: 09.05.2007
(73) Patentinhaber: Haas Food Equipment GmbH, 1210 Wien (AT)
(72) Erfinder: HAAS, Johan, A-3400 Klosterneuburg (AT); HAAS, Josef, jun., A-1210 Wien (AT); JIRASCHEK, Stefan, A-2202 Königsbrunn (AT); DRAPELA, Norbert, A-2103 Langenzersdorf (AT); HOGL, Josef, A-2042 Guntersdorf (AT)
(74) Vertreter: Puchberger, Peter
(86) Internationale Anmeldenummer: PCT/EP2005/008974
(87) Internationale Veröffentlichungsnummer: WO 2006/021373

(56) Entgegenhaltungen:
- EP-A- 0 130 772
- EP-A- 0 659 343
- EP-A- 0 693 255
- EP-A- 0 774 209
- WO-A-02/071848
- DE-U1- 20 306 828
- FR-A- 2 796 810
- GB-A- 2 324 978
- US-A- 4 084 494
- US-A- 4 692 109

## Beschreibung

Die Erfindung bezieht sich auf eine Vorrichtung zum Herstellen von polsterförmigen Hohlkörpern, die an entgegengesetzten Enden durch Quetschkanten begrenzt sind.

### Stand der Technik:

Die Herstellung von essbaren polsterförmigen Hohlkörpern ist z. B. aus der EP 774 209 B1, aus der WO 02/071848 A1 und aus der EP 0 659 343 A1 bekannt.

Die EP 774 209 B1 offenbart die Herstellung der essbaren Hohlkörper aus einem extrudierten, plastisch verformbaren Schokoladeröhrchen. Dieses passiert nach dem Extruder zwei stationäre Quetschwerkzeuge, die abwechselnd betätigt werden und jeweils den aus dem Extruder vorstehenden Endabschnitt des Röhrchens unter Erzeugung einer horizontalen bzw. vertikalen Quetschkante abschneiden.

Die WO 02/071848 A1 offenbart die Herstellung von essbaren Hohlkörpern aus einer gebackenen, plastisch verformbaren Hohlhippe. Diese wird in Längsrichtung durch einen horizontalen Transportpfad befördert, entlang dem zwei langgestreckte, einander gegenseitig überlappende Quetschvorrichtung angeordnet sind. Diese besitzen sich in Längsrichtung des Transportpfades bewegende und an dessen Beginn abwechselnd in Aktion tretende Quetschwerkzeuge, die die in den Transportpfad eingeschobene Hohlhippe abwechselnd unter Erzeugung einer horizontalen bzw. vertikalen Quetschkante zerteilen.

In beiden Fällen ist die Leistungsfähigkeit nicht sehr groß. Um bei den Hohlkörpern einen dauerhaften Verschluss ihrer durch Quetschkanten entstandenen Enden zu erzielen, ist bei allen Quetschwerkzeugen eine deutliche Verzögerung des die Quetschkanten erzeugenden Quetschvorganges unmittelbar vor dem endgültigen Durchtrennen des jeweiligen, bereits flachgedrückten Röhrchenbereiches erforderlich. Dies setzt eine langsame oder durch eine Haltezeit verzögerte Relativbewegung der beiden, den Quetschvorgang ausführenden Quetschbacken voraus. Dadurch wird aber die pro Zeiteinheit herstellbare Menge an polsterförmigen Hohlkörpern sehr stark begrenzt.

Aus der EP 0 659 343 A1 ist ein als "Shaping Cutter" bezeichneter Apparat bekannt, in dem eine in Längsrichtung des Apparats kontinuierlich vorgeschobene, plastisch verformbare Hohlhippe durch sich synchron mit der Hohlhippe vorwärts bewegende Quetschwerkzeuge in polsterförmige Hohlkörper zerteilt wird, wobei jeweils ein einzelner polsterförmiger Hohlkörper am vorderen Ende der Hohlhippe abgetrennt wird.

### Zusammenfassung der Erfindung

Die Erfindung schlägt eine Vorrichtung zum gleichzeitigen Herstellen von mehreren polsterförmigen Hohlkörpern vor, die an entgegengesetzten Enden durch Quetschkanten begrenzt sind. Die Vorrichtung ist mit einem Gestell, mit einer Zuführeinrichtung für in polsterförmige Hohlkörper zu zerteilende Röhrchen und mit einer im Gestell angeordneten, die Röhrchen in polsterförmige Hohlkörper zerteilenden Quetschvorrichtung versehen. Die Zuführeinrichtung ist mit einem Fallschacht versehen, der die Röhrchen quer zu ihrer Längsrichtung der Quetschvorrichtung zuführt. Die Quetschvorrichtung ist im Gestell unterhalb des Fallschachts angeordnet. Die Quetschvorrichtung besitzt zumindest ein langgestrecktes Quetschwerk oder zwei oder mehrere, nebeneinander angeordnete, langgestreckte Quetschwerke. Das oder jedes Quetschwerk ist der Längsrichtung der Röhrchen zugeordnet und besitzt eine Reihe von in Längsrichtung der Röhrchen hintereinander angeordneten Quetschwerkzeugen. Jedes Quetschwerkzeug besitzt eine im Gestell fixierte, stationäre Quetschbacke und eine dieser in Querrichtung gegenüberliegende, bewegliche Quetschbacke, die auf einem im Gestell in Querrichtung hin und her bewegbaren Schlitten angeordnet ist.

Bei der erfindungsgemäßen Vorrichtung passieren die Röhrchen den Fallschacht und gelangen quer zu ihrer Längsrichtung in ein langgestrecktes Quetschwerk der Quetschvorrichtung, bei welchem die beweglichen Quetschbacken in Querrichtung zurückgezogen und die Quetschwerkzeuge geöffnet sind. Zum Zerteilen der Röhrchen werden die beweglichen Quetschbacken mit Hilfe der sie tragenden Schlitten in Querrichtung vorgeschoben und die Quetschwerkzeuge geschlossen. Dabei werden stets alle Quetschwerkzeuge eines Quetschwerks gleichzeitig geschlossen. Das in ein geöffnetes Quetschwerk eingebrachte Röhrchen wird in einem einzigen Arbeitsgang in mehrere, in Längsrichtung aufeinanderfolgende Hohlkörper zerteilt.

Bei der erfindungsgemäßen Vorrichtung wird der Quetschvorgang der Quetschwerkzeuge jeweils von dem die bewegliche Quetschbacke des Quetschwerkzeugs tragenden Schlitten ausgeführt. Dieser Quetschvorgang wird durch die Bewegung des betreffenden Schlittens gesteuert. Die Bewegung des Schlittens kann mit einer längeren Haltezeit kombiniert werden.

Bei der erfindungsgemäßen Vorrichtung werden die Quetschwerkzeuge der langgestreckten Quetschwerke stets gleichzeitig betätigt. Die beweglichen Quetschbacken eines Quetschwerks können auf zwei oder mehreren, in Querrichtung verfahrbaren Schlitten angeordnet sein, die zum Betätigen der Quetschwerkzeuge des Quetschwerks synchron hin und her bewegt werden. Die beweglichen Quetschbacken eines Quetschwerks können auf einem einzigen, in Querrichtung verfahrbaren Schlitten angeordnet sein, der ein im Quetschwerk befindliches Röhrchen mit seiner Schlittenbewegung in zahlreiche, polsterförmige Hohlkörper zerteilt. Ein im Gestell der Vorrichtung in Querrichtung verfahrbarer Schlitten kann die beweglichen Quetschbacken von zwei oder mehreren, benachbarten Quetschwerken tragen. Bei der Bewegung dieses Schlittens werden dann die in den Quetschwerken befindlichen Röhrchen gleichzeitig in zahlreiche, polsterförmige Hohlkörper zerteilt.

Erfindungsgemäß kann jedes Quetschwerk zwei sich in Längsrichtung erstreckende und in Querrichtung einander gegenüberliegende Werkzeugeinsätze besitzen, von denen der eine Werkzeugeinsatz die stationären Quetschbacken der Quetschwerkzeuge des Quetschwerks trägt und im Gestell fix verankert ist und der andere Werkzeugeinsatz die bewegliche Quetschbacken der Quetschwerkzeuge des Quetschwerks trägt und im Gestell in Querrichtung verfahrbar angeordnet ist.

Die Verwendung von Werkzeugeinsätzen erleichtert den Ersatz der Quetschbacken und vereinfacht den Produktwechsel. Für einen Produktwechsel müssen nur die dem bisherigen Produkt entsprechenden Werkzeugeinsätze entfernt und durch dem neuen Produkt entsprechende Werkzeugeinsätze ersetzt werden. Dabei können Werkzeugeinsätze, bei denen die Quetschbacken geradlinige, vertikal ausgerichtete Quetschkanten tragen, gegen Werkzeugeinsätze ausgetauscht werden, bei denen die Quetschbacken mit anders geformten oder anders ausgerichteten Quetschkanten versehen sind. Es können Werkzeugeinsätze, bei denen die Quetschbacken jeweils gleich ausgerichtete, vertikale oder schräge Quetschkanten tragen, gegen Werkzeugeinsätze getauscht werden, deren Quetschbacken abwechselnd gegeneinander verdrehte Quetschkanten tragen.

Erfindungsgemäß können bei einem Quetschwerk in Längsrichtung aufeinanderfolgende Quetschwerkzeuge vorgesehen sein, bei denen die Quetschbacken von Quetschwerkzeug zu Quetschwerkzeug gegeneinander verdrehte, vorzugsweise um 90° gegeneinander verdrehte Quetschkanten tragen. Diese Ausbildung erlaubt die Herstellung von polsterförmigen Hohlkörpern, die an entgegengesetzten Enden gegeneinander verdrehte, vorzugsweise um 90° gegeneinander verdrehte Endkanten aufweisen.

Bei der erfindungsgemäßen Vorrichtung kann eine Quetschvorrichtung mit zwei langgestreckten, in Querrichtung nebeneinander angeordneten und durch einen in Querrichtung verfahrbaren Schlitten gleichzeitig betätigbaren Quetschwerken vorgesehen sein, wobei die beweglichen Quetschbacken des einen Quetschwerks im Inneren der Quetschvorrichtung Rücken an Rücken mit den stationären Quetschbacken des anderen Quetschwerks angeordnet und die beweglichen Quetschbacken beider Quetschwerke am Schlitten angeordnet sind. In dieser Vorrichtung können jeweils zwei Röhrchen gleichzeitig in einzelne Hohlkörper zerteilt werden, was einen höheren Ausstoß an Hohlkörpern ermöglicht.

Bei der erfindungsgemäßen Vorrichtung kann eine Quetschvorrichtung mit zwei langgestreckten, in Querrichtung nebeneinander angeordneten und durch einen in Querrichtung verfahrbaren Schlitten abwechselnd betätigbaren Quetschwerken vorgesehen sein, wobei die beweglichen Quetschbacken beider Quetschwerke im Inneren der Quetschvorrichtung Rücken an Rücken angeordnet und am Schlitten verankert sind und die den beweglichen Quetschbacken gegenüberliegenden, stationären Quetschbacken der beiden Quetschwerke im Gestell der Quetschvorrichtung verankert sind. Die abwechselnde Betätigung der beiden Quetschwerke erlaubt es, in beiden Quetschwerken die jeweils für das Verschweißen der flach gedrückten Stellen der Röhrchen zur Verfügung stehende Zeitspanne deutlich zu vergrößern, ohne den Ausstoß an Hohlkörpern nennenswert zu verringen.

Erfindungsgemäß können die beiden Quetschwerke jeweils zwei langgestreckte, in Querrichtung einander gegenüberliegende Werkzeugeinsätze besitzen, wobei für die stationären Quetschbacken der Quetschwerke im Gestell verankerte, äußere Werkzeugeinsätze und für die bewegliche Quetschbacken der Quetschwerke am Schlitten verankerte, innere Werkzeugeinsätze vorgesehen sind. Diese Ausbildung erleichtert und vereinfacht den Austausch bzw. die Wartung der Quetschwerkzeuge der Quetschwerke.

Erfindungsgemäß kann der in Querrichtung verfahrbare Schlitten eine Abdeckhaube tragen, die den Fallschacht der Quetschvorrichtung in zwei, in Querrichtung nebeneinanderliegende Teilschächte unterteilt.

Bei der erfindungsgemäßen Vorrichtung kann bei jedem Quetschwerk eine diesem zugeordnet Abdeckung vorgesehen sein, die einen im Gestell verankerten, stationären Abdeckteil für die stationären Quetschbacken des Quetschwerks und einen in Querrichtung bewegbaren Abdeckteil für die beweglichen Quetschbacken des Quetschwerks vorsieht, wobei zwischen den beiden Abdeckteilen eines Quetschwerks ein Eintrittsschlitz für die Röhrchen angeordnet ist.

Bei der erfindungsgemäßen Vorrichtung kann für die beiden nebeneinander angeordneten und durch einen in Querrichtung verfahrbaren Schlitten abwechselnd betätigbaren Quetschwerke eine Abdeckung vorgesehen sein, die im Gestell verankerte, seitliche Abdeckteile für die stationären Quetschbacken der beiden Quetschwerke und einen zwischen den seitlichen Abdeckteilen angeordneten, am Schlitten verankerten, eine konvexe oder giebelförmige Oberseite aufweisenden, mittleren Abdeckteil für die am Schlitten verankerten Quetschbacken der beiden Quetschwerke vorsieht, wobei bei jedem Quetschwerk zwischen dem seitlichen Abdeckteil und dem mittleren Abdeckteil ein Eintrittsschlitz für die Röhrchen angeordnet ist.

Bei der erfindungsgemäßen Vorrichtung kann der die Röhrchen quer zu ihrer Längsrichtung einer Quetschvorrichtung zuführende Fallschacht an zumindest einer seiner Stirnseiten durch eine den Enden der Röhrchen zugeordnete Leitvorrichtung begrenzt sein. Diese Leitvorrichtung unterstützt das Zuführen der Röhrchen zur Quetschvorrichtung.

Erfindungsgemäß kann jede Leitvorrichtung an einer in Querrichtung verlaufenden Stirnwand des Fallschachtes angebracht sein und ein endloses Band besitzen, das um diese Stirnwand des Fallschachtes herumgeführt ist und den Fallschacht stirnseitig begrenzt.

Erfindungsgemäß kann die Leitvorrichtung als Abstreifeinrichtung ausgebildet sein, bei der ein umlaufendes, endloses Band aus den Enden der Röhrchen austretende Füllmasse abstreift und einer außerhalb des Fallschachtes angeordneten Bandreinigungsvorrichtung zuführt. Diese Ausbildung ist für die Verarbeitung von gefüllten Röhrchen zu gefüllten polstertörmigen Hohlkörpern von Vorteil.

Erfindungsgemäß können beheizbare Quetschwerkzeuge vorgesehen sein, bei denen zumindest die stationären Quetschbacken vorzugsweise elektrisch beheizbar sind. Diese Ausbildung ist für das bleibende Verschließen der von den Quetschwerkzeugen erzeugten, die polsterförmigen Hohlkörper begrenzenden Quetschkanten von Vorteil.

Erfindungsgemäß kann bei jedem Quetschwerk ein über den Quetschwerkzeugen angeordneter Infrarotstrahler zum Beheizen der Quetschwerkzeuge vorgesehen sein.

Nachstehend wird die Erfindung anhand von mehreren, in den Zeichnungen dargestellten Ausführungsbeispielen näher erläutert.

### Kurze Beschreibung der Zeichnungen:

In den Zeichnungen zeigen:
- Fig. 1: einen vertikalen Schnitt durch eine mit nur einem Quetschwerk ausgerüstete erfindungsgemäße Vorrichtung, bei geöffnetem Quetschwerk,
- Fig. 2: einen vertikalen Schnitt durch die Vorrichtung der Fig. 1 bei geschlossenem Quetschwerk,
- Fig. 3: eine Draufsicht auf die Vorrichtung der Fig. 1 bei geöffnetem Quetschwerk,
- Fig. 4: die Werkzeugeinsätze des Quetschwerks der Vorrichtung von Fig. 1 in Stirnansicht,
- Fig. 5: eine Draufsicht auf die beiden Werkzeugeinsätze der Fig. 4,
- Fig. 6: schematisch einen polsterförmigen Hohlkörper mit um 90° gegeneinander verdrehten Endkanten,
- Fig. 7: einen vertikalen Schnitt durch eine erfindungsgemäße Vorrichtung, die zwei nebeneinanderliegende Quetschwerke besitzt, wobei das linke Quetschwerk geöffnet und das rechte Quetschwerk geschlossen ist,
- Fig. 8: einen vertikalen Schnitt durch die Vorrichtung der Fig. 7, wobei das linke Quetschwerk geschlossen und das rechte Quetschwerk geöffnet ist,
- Fig. 9: eine Draufsicht auf die Vorrichtung von Fig. 7, wobei das linke Quetschwerk geöffnet und das rechte Quetschwerk geschlossen ist,
- Fig. 10: eine Draufsicht auf eine weitere erfindungsgemäße Vorrichtung, die zwei nebeneinander angeordnete Quetschwerke besitzt, von denen das linke Quetschwerk geöffnet und das rechte Quetschwerk geschlossen ist,
- Fig. 11: die Vorrichtung der Fig. 10 in einem vertikalen, quer zur Längsrichtung der Quetschwerke verlaufenden Schnitt,
- Fig. 12: einen vertikalen Längsschnitt durch ein Quetschwerk der Vorrichtung von Fig. 10,
- Fig. 13: einen vertikalen Schnitt durch eine weitere erfindungsgemäße Vorrichtung, die zwei nebeneinander angeordnete Quetschwerke besitzt, von denen das linke Quetschwerk geschlossen und das rechte Quetschwerk geöffnet ist,
- Fig. 14: eine Draufsicht auf die Vorrichtung der Fig. 13,
- Fig. 15: eine Draufsicht auf eine erfindungsgemäße Vorrichtung mit vier nebeneinander angeordneten Quetschwerken,
- Fig. 16-20: verschiedene Werkzeugeinsätze für die Quetschwerke und die mit diesen Werkzeugeinsätzen aus einem Röhrchen R hergestellten polsterförmigen Hohlkörper, und
- Fig. 21: ein Detail eines Werkzeugeinsatzes.

### Beschreibung von Ausführungsbeispielen:

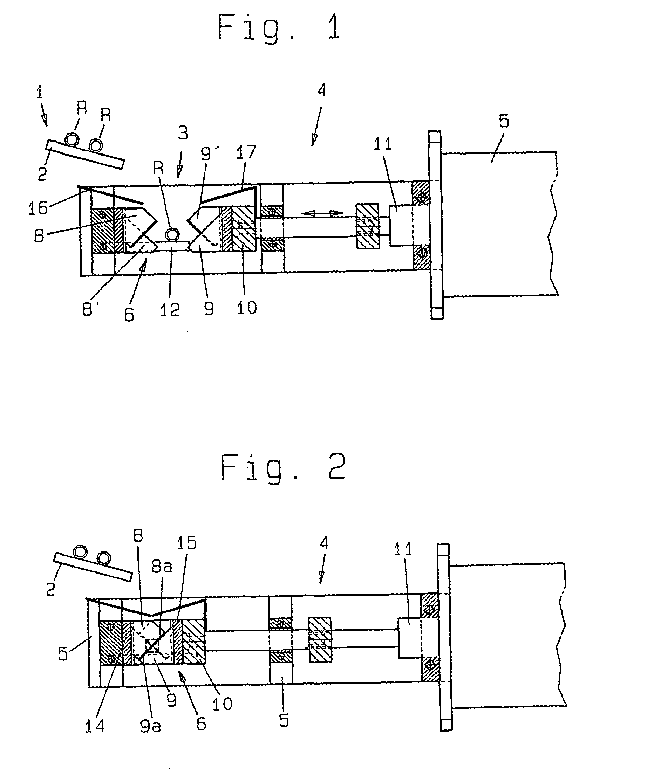

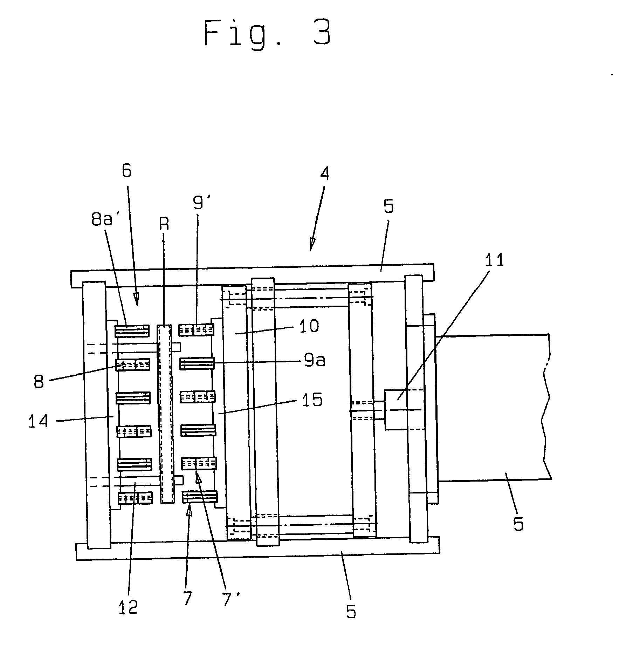

Die Fig. 1-3 zeigen eine Vorrichtung zum gleichzeitigen Herstellen von mehreren, polsterförmigen Hohlkörpern aus plastisch verformbaren, gefüllten oder ungefüllten Röhrchen. Die Röhrchen R werden quer zu ihrer Längsachse einer Quetschvorrichtung zugeführt, in der sie in einzelne Hohlkörper aufgeteilt werden, die dann nach unten aus der Vorrichtung herausfallen.

Die Vorrichtung umfasst eine Zuführeinrichtung 1 für die Röhrchen R. Die Zuführeinrichtung 1 sieht eine schräg abfallende Rutsche 2 und einen an diese anschließenden Fallschacht 3 vor. Die Röhrchen werden quer zu ihrer Längsachse über die Rutsche 2 zum Fallschacht 3 befördert. Der Fallschacht 3 führt die Röhrchen R quer zu ihrer Längsachse einer Quetschvorrichtung 4 zu. Diese besitzt ein in einem Gestell 5 stationär angeordnetes Quetschwerk 6 mit einem der Röhrchenlängsachse zugeordneten, langgestreckten Arbeitsbereich. Entlang dem Arbeitsbereich sind mehrere, jeweils in Querrichtung ausgerichtete Quetschwerkzeuge 7 in Längsrichtung hintereinander angeordnet. Die Quetschwerkzeuge 7 sind im Gestell 5 stationär angeordnet.

Jedes Quetschwerkzeug 7 sieht eine im Gestell 5 fixierte, stationäre Quetschbacke 8 vor, der eine bewegliche Quetschbacke 9 in Querrichtung gegenüberliegt. Die bewegliche Quetschbacke 9 ist auf einem im Gestell 5 in Querrichtung hin und her bewegbaren Schlitten 10 angebracht. Zum Öffnen des Quetschwerkzeugs 7 wird die bewegliche Quetschbacke 9 durch die Bewegung des Schlittens 10 von der stationären Quetschbacke 8 weg zurückgezogen. Zum Betätigen des Quetschwerkzeugs 7 wird die bewegliche Quetschbacke 9 durch die Bewegung des Schlittens 10 zu der stationären Quetschbacke 8 hin vorgeschoben. Die Bewegungen des Schlittens 10 werden von einem mit ihm verbundenen Arbeitszylinder 11 erzeugt.

Für jedes Quetschwerkzeug 7 kann ein eigener, in Querrichtung hin und her bewegbarer Schlitten vorgesehen sein.

Bei dem in den Fig. 1-3 dargestellten Quetschwerk 6 ist nur ein einziger, in Querrichtung hin und her bewegbarer Schlitten 10 vorgesehen. Der Schlitten 10 trägt die beweglichen Quetschbacken 9 aller im Quetschwerk 6 in einer Reihe in Längsrichtung hintereinander angeordneten Quetschwerkzeuge 7. Durch die hin und hergehenden Bewegungen des Schlittens 10 werden stets alle Quetschwerkzeuge 7 des Quetschwerks 6 gleichzeitig betätigt.

Beim Betrieb der Vorrichtung der Fig. 1-3 wird ein Röhrchen R über die Zuführeinrichtung 1 in das Quetschwerk 6 eingebracht und dort durch Betätigen der Quetschwerkzeuge 7 in Querrichtung zerteilt. Die dabei entstandenen, polsterförmigen Hohlkörper fallen nach unten aus dem Quetschwerk 6. Das Röhrchen R gelangt über die Rutsche 2 und den Fallschacht 3 in den durch Zurückziehen des Schlittens 10 geöffneten Arbeitsbereich des Quetschwerks 6. Dort landet es zwischen den auseinandergefahrenen Quetschbacken 8, 9 der Quetschwerkzeuge 7. Im geöffneten Quetschwerk 6 wird das Röhrchen R von zwei unteren Haltearmen 12 aufgefangen, die jeweils einem stirnseitigen Ende des Quetschwerks 6 benachbart angeordnet sind. Anschließend wird das Quetschwerk 6 betätigt. Der Arbeitszylinder 11 schiebt den Schlitten 10 in Querrichtung vor. Die am Schlitten 10 befestigten, beweglichen Quetschbacken 9 schieben das auf den unteren Haltearmen 12 liegende Röhrchen R in Querrichtung vor. Die beweglichen Quetschbacken 9 schieben das Röhrchen R gegen die am Gestell 5 befestigten, stationären Quetschbacken 8. Während dieser Schlittenbewegung wird das Röhrchen R von jedem einzelnen Quetschwerkzeug 7 plastisch verformt, örtlich flach zusammengedrückt und an der flachgedrückten Stelle durchtrennt. Nach dem Durchtrennen der flachgedrückten Bereiche des Röhrchens R wird der Schlitten 10 zum Öffnen des Quetschwerks 6 durch den Arbeitszylinder 11 in Querrichtung wieder zurückgezogen. Jetzt kann das nächste Röhrchen R in das geöffnete Quetschwerk 6 eingebracht werden und ein neues Arbeitsspiel des die Quetschwerkzeuge 7 betätigenden Schlittens 10 kann beginnen.

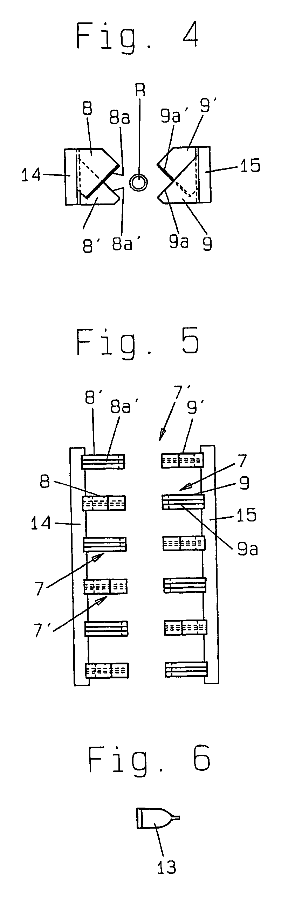

Das in den Fig. 1-3 dargestellte Quetschwerk 6 besitzt in Längsrichtung aufeinanderfolgende Quetschwerkzeuge 7, 7' mit abwechselnd gegenüber der Vertikalen um 45° nach links bzw. um 45° nach rechts verdrehten Quetschkanten 8a, 9a bzw. 8a', 9a'. Dadurch entstehen polsterförmige Hohlkörper 13 mit flachgedrückten, um 90° zueinander verdrehten Endkanten (Fig. 6).

Das Quetschwerk 6 enthält zwei einander gegenüberliegende Werkzeugeinsätze 14 und 15 (Fig. 4, 5). Der im Gestell 5 fix verankerbare Werkzeugeinsatz 14 trägt die in einer Längsreihe hintereinander angeordneten, stationären Quetschbacken 8, 8' der Quetschwerkzeuge 7. Der im Schlitten 10 fix verankerbare Werkzeugeinsatz 15 trägt die in einer Längsreihe hintereinander angeordneten, beweglichen Quetschbacken 9, 9' der Quetschwerkzeuge 7.

Die Quetschvorrichtung 4 ist mit einer dem Quetschwerk 6 zugeordneten Abdeckung versehen. Die Abdeckung sieht einen stationären Abdeckteil 16 vor, der am Gestell 5 befestigt ist und die stationären Quetschbacken 8 des Quetschwerks 6 überdeckt. Die Abdeckung sieht weiters einen beweglichen Abdeckteil 17 vor, der an dem in Querrichtung verfahrbaren Schlitten 10 des Quetschwerks 6 befestigt ist und die beweglichen Quetschbacken 9 des Quetschwerks 6 überdeckt. Die beiden Abdeckteile 16, 17 bilden eine sich nach unten verjüngende Rinne für den Eintritt der Röhrchen R in den Arbeitsbereich des Quetschwerks 6. Diese Rinne mündet an ihrer Unterseite in einen entlang dem Arbeitsbereich des Quetschwerks 6 verlaufenden Eintrittsschlitz, der von den einander zugewandten Rändern der beiden Abdeckteile 16, 17 begrenzt wird. Der Eintrittsschlitz wird durch den am Schlitten 10 angebrachten und sich mit diesem mitbewegenden Abdeckteil 17 geöffnet und geschlossen.

Eine weitere Ausführungsform einer Vorrichtung zum gleichzeitigen Herstellen von mehreren, polsterförmigen Hohlkörpern sieht eine Quetschvorrichtung vor, bei der zwei oder mehrere, jeweils der Längsrichtung der Röhrchen zugeordnete, langgestreckte Quetschwerke in Querrichtung nebeneinander angeordnet sind. Bei dieser Vorrichtung werden die Röhrchen der Quetschvorrichtung über eine Zuführeinrichtung zugeführt, die den einzelnen Quetschwerken zugeordnete und mit einem Fallschacht versehene Zuführabschnitte besitzt. Die Quetschwerke besitzen langgestreckte, der Längsrichtung der Röhrchen zugeordnete Arbeitsbereiche mit in Abständen hintereinander angeordneten Quetschwerkzeugen. Die Quetschwerkzeuge werden jeweils von einer stationären Quetschbacke und einer beweglichen Quetschbacke gebildet. Bei benachbarten Quetschwerken sind die stationären Quetschbacken eines Quetschwerks Rücken an Rücken mit den beweglichen Quetschbacken des benachbarten Quetschwerks angeordnet. Die beweglichen Quetschbacken der Quetschwerke sind auf einem in Querrichtung hin und her bewegbaren Schlitten angebracht, der die Quetschwerke der Quetschvorrichtung gleichzeitig betätigt. Um einen gleichbleibenden Quetschvorgang bei allen vom Schlitten gleichzeitig betätigten Quetschwerkzeugen sicherzustellen, können die Quetschbacken am Gestell bzw. am Schlitten federnd abgestützt sein.

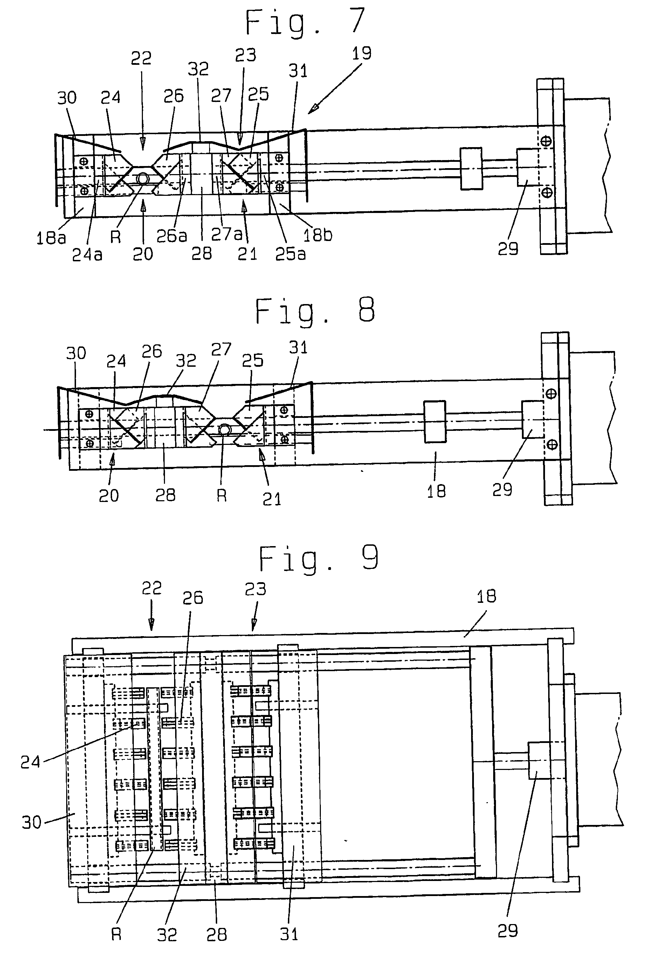

Die Fig. 7-9 zeigen eine in einem Gestell 18 untergebrachte Quetschvorrichtung 19, bei der zwei langgestreckte Quetschwerke 20, 21 nebeneinander angeordnet sind. Im Gestell 18 werden die Quetschwerke 20, 21 an ihren voneinander abgewandten, äußeren Rändern jeweils durch einen zu ihrer Längsrichtung parallel verlaufenden Träger 18a, 18b begrenzt. Die Quetschwerke 20, 21 besitzen parallel zueinander verlaufende Arbeitsbereiche 22, 23 mit in Längsrichtung hintereinander angeordneten Quetschwerkzeugen. Die Quetschwerkzeuge besitzen einander gegenüberliegende, quer zur Längsrichtung der Röhrchen R ausgerichtete Quetschbacken, von denen die äußeren, stationären Quetschbacken 24, 25 an den äußeren Rändern der Quetschwerke 20, 21 angeordnet sind, während die inneren, beweglichen Quetschbacken 26, 27 im Inneren der Quetschvorrichtung 19 auf einem quer zur Längsrichtung der Quetschwerke 20, 21 hin und her bewegbaren Schlitten 28 verankert sind. Die äußeren Quetschbacken 24, 25 stehen jeweils von einem äußeren Werkzeugeinsatz 24a, 25a nach innen ab, der am äußeren Rand des Quetschwerks 20, 21 am Träger 18a bzw. 18b des Gestells 18 fix verankert ist. Die inneren Quetschbacken 26, 27 stehen jeweils von einem inneren Werkzeugeinsatz 26a, 27a nach außen ab, der am Schlitten 28 fix verankert ist. Die inneren Werkzeugeinsätze 26a, 27a der beiden Quetschwerke 20, 21 sind voneinander abgewandt am Schlitten 28 verankert. Dieser wird von einem mit ihm verbundenen Arbeitszylinder 29 im Gestell 18 quer zur Längsrichtung der Quetschwerke 20, 21 hin und her geschoben.

Bei der Quetschvorrichtung 19 überdeckt eine aus mehreren Abdeckteilen 30, 31, 32 bestehende Abdeckung die äußeren und inneren Werkzeugeinsätze der beiden Quetschwerke 20, 21. Die äußeren Werkzeugeinsätze 24a, 25a der Quetschwerke 20, 21 werden jeweils von einem seitlichen, stationären Abdeckteil 30, 31 überdeckt, der am Gestell 18 befestigt ist. Zwischen den beiden stationären Abdeckteilen 30, 31 ist ein mittlerer Abdeckteil 32 vorgesehen, der am Schlitten 28 angebracht ist und dort die inneren Werkzeugeinsätze 26a, 27a der beiden Quetschwerke 20, 21 überdeckt. Bei jedem Quetschwerk 20, 21 bildet der seitliche, stationäre Abdeckteil 30, 31 zusammen mit dem am Schlitten 28 angebrachten, mittleren Abdeckteil 32 eine sich nach unten verjüngende Rinne, die an ihrer Unterseite in einen dem Arbeitsbereich 22, 23 des Quetschwerks 20, 21 zugeordneten Eintrittsschlitz für die Röhrchen R mündet.

Die beiden Quetschwerke 20, 21 besitzen in Längsrichtung aufeinanderfolgende Quetschwerkzeuge, bei denen die Quetschkanten abwechselnd gegenüber der Vertikalen um 45° nach links bzw. um 45° nach rechts verdreht sind (Fig. 8, 9). Beide Quetschwerke 20, 21 erzeugen polsterförmiger Hohlkörper, die flache und um 90° gegeneinander verdrehte Endkanten besitzen.

Bei der Quetschvorrichtung 19 werden die beiden Quetschwerke 20, 21 durch den mit Hilfe des Arbeitszylinders 29 abwechselnd hin und her bewegten Schlitten 28 abwechselnd betätigt und die den Quetschwerken 20, 21 abwechselnd zugeführten Röhrchen R werden jeweils für sich in einzelne, polsterförmige Hohlkörper aufgeteilt.

Die Fig. 7 und 9 zeigen die Quetschvorrichtung 19 mit nach rechts verschobenem Schlitten 28, nach der Betätigung des rechten Quetschwerks 21. Wird der Schlitten 28 in Fig. 7, 9 nach links verschoben, so wird das linke Quetschwerk 20 betätigt und das rechte Quetschwerk 21 geöffnet. Im linken Quetschwerk 20 werden die beweglichen Quetschbacken 26 zu den stationären Quetschbacken 24 bewegt und das zwischen diesen angeordnete Röhrchen R wird örtlich flach zusammengedrückt und in polsterförmige Hohlkörper aufgeteilt. Mit dem Schlitten 28 wird der mittlere Abdeckteil 32 nach links bewegt. Dadurch wird der links vom mittleren Abdeckteil 32 angeordnete Eintrittsschlitz des linken Quetschwerks 20 geschlossen und der rechts vom mittleren Abdeckteil 32 angeordnete Eintrittsschlitz des rechten Quetschwerks 21 geöffnet. Mit dem Schlitten 28 werden beim rechten Quetschwerk 21 die beweglichen Quetschbacken 27 nach links bewegt und von den stationären Quetschbacken 25 wegbewegt. Nach dem Betätigen des linken Quetschwerks 20 ist der Schlitten 28 in der Quetschvorrichtung 19 nach links verschoben und nimmt die in Fig. 8 gezeigte Position ein. Das nächste Röhrchen R wird dem geöffneten, rechten Quetschwerk 21 zugeführt. Wird der Schlitten 28 in Fig. 8 nach rechts verschoben, so wird jetzt das rechte Quetschwerk 21 betätigt und das linke Quetschwerk 20 geöffnet. Beim rechten Quetschwerk 21 werden die beweglichen Quetschbacken 27 nach rechts zu den stationären Quetschbacken 25 bewegt und das zwischen den Quetschbacken 25, 27 angeordnete Röhrchen R wird örtlich flach zusammengedrückt und in polsterförmige Hohlkörper aufgeteilt. Mit dem Schlitten 28 wird der mittlere Abdeckteil 32 nach rechts bewegt. Dadurch wird der rechts vom mittleren Abdeckteil 32 angeordnete Eintrittsschlitz des rechten Quetschwerks 21 geschlossen und der links vom mittleren Abdeckteil 32 angeordnete Eintrittsschlitz des linken Quetschwerks 20 geöffnet. Gleichzeitig werden beim linken Quetschwerk 20 die beweglichen Quetschbacken 26 nach rechts bewegt und von den stationären Quetschbacken 24 wegbewegt.

Bei der Quetschvorrichtung 19 steht, verglichen mit jener der Fig. 1-3, bei gleichem Durchsatz an Röhrchen, etwa doppelt so viel Zeit zur Verfügung, um an den durch die Quetschwerkzeuge jeweils flach gedrückten Stellen der Röhrchen R eine permanente Verbindung der aufeinanderliegen Röhrchenwände zu erzielen.

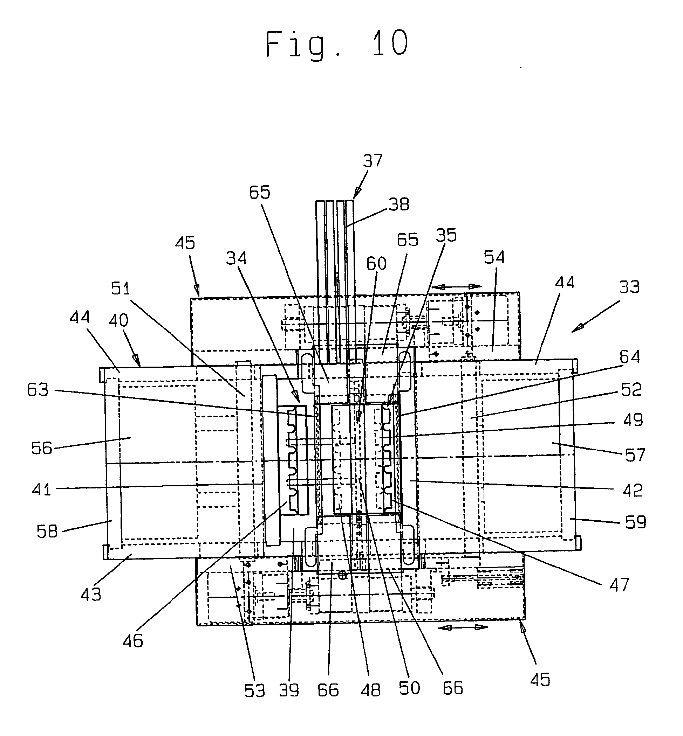

Die Fig. 10-12 zeigen eine Vorrichtung, bei der plastisch verformbare Röhrchen R in Längsrichtung einer Quetschvorrichtung 33 zugeführt und in dieser in zwei langgestreckten, nebeneinanderliegenden Quetschwerken 34, 35 abwechselnd verarbeitet werden. In den Quetschwerken 34, 35 werden die Röhrchen R quer zu ihrer Längsrichtung durchtrennt und in polsterförmige Hohlkörper 36 aufgeteilt, die nach unten aus dem jeweiligen Quetschwerk 34, 35 herausfallen.

Die Röhrchen R werden über eine sich in Längsrichtung der Quetschwerke 34, 35 erstreckende Zuführeinrichtung 37 in die Quetschvorrichtung 33 eingebracht und dort dem Arbeitsbereich der Quetschvorrichtung 33 zugeführt, in dem die beiden Quetschwerke 34, 35 quer zu ihrer Längsrichtung nebeneinander angeordnet sind. Die Zuführeinrichtung 37 sieht eine schräg abfallende Rutsche 38 und einen dieser nachgeordneten Fallschacht 39 vor. Die Rutsche 38 ist der Quetschvorrichtung 33 vorgelagert. Der Fallschacht 39 ist über dem Arbeitsbereich der Quetschvorrichtung 33 angeordnet. Die Röhrchen R gleiten in Längsrichtung über die Rutsche 38 in den Fallschacht 39, in dem sie quer zu ihrer Längsrichtung den Quetschwerken 34, 35 zugeführt werden.

Die Quetschvorrichtung 33 ist in einem kastenförmigen Gestell 40 untergebracht, das mit zwei zur Längsrichtung der Quetschwerke 34, 35 parallel verlaufenden Trägern 41, 42 den Arbeitsbereich der Quetschvorrichtung 33 seitlich begrenzt, in dem die beiden Quetschwerke 34, 35 quer zu ihrer Längsrichtung nebeneinander angeordnet sind. Die Träger 41, 42 sind mit der Vorderwand 43 und der Rückwand 44 des Gestells 40 verbunden. Sie bilden jeweils den äußeren Rand des unmittelbar benachbarten Quetschwerks 34, 35. Die Quetschwerke 34, 35 werden von einem im Gestell 40 quer zur Längsrichtung der Quetschwerke 34, 35 hin und her bewegbaren Schlitten 45 abwechselnd betätigt

Die Quetschwerke 34, 35 besitzen parallel zueinander verlaufende Arbeitsbereiche mit in Längsrichtung hintereinander angeordneten Quetschwerkzeugen. Die Quetschwerkzeuge besitzen einander gegenüberliegende, vertikal ausgerichtete Quetschbacken. An den äußeren Rändern der Quetschwerke 34, 35 sind stationäre, nach innen gerichtete Quetschbacken vorgesehen, denen im Inneren der Quetschvorrichtung 33 angeordnete, nach außen gerichtete, bewegliche Quetschbacken gegenüberliegen. Die äußeren Quetschbacken werden von langgestreckten, äußeren Werkzeugleisten 46, 47 gebildet, die bei jedem Quetschwerk 34, 35 an dem seinen äußeren Rand bildenden Träger 41, 42 des Gestells 40 befestigt ist. Die inneren Quetschbacken werden von langgestreckten, inneren Werkzeugleisten 48, 49 gebildet, die voneinander abgewandt an einem mittleren Tragarm 50 des Schlittens 45 verankert sind. Dieser Tragarm 50 verläuft im Inneren der Quetschvorrichtung 33 parallel zur Längsrichtung der beiden Quetschwerke 34, 35.

Der Schlitten 45 besitzt zwei seitliche Tragarme 51, 52, die, bezogen auf Fig. 10, links und rechts vom Arbeitsbereich der Quetschvorrichtung 33 angeordnet sind. Der mittlere Tragarm 50 und die beiden seitlichen Tragarme 51, 52 sind außerhalb des Gestells 40 durch Längsträger 53, 54 miteinander verbunden, die der Vorderwand 43 bzw. der Rückwand 44 des Gestells 40 benachbart sind. In der Vorderwand 43 und in der Rückwand 44 des Gestells 40 sind jeweils in Bewegungsrichten des Schlittens 45 langgestreckte Durchtrittsöffnungen 55 für die Tragarme 50, 51, 52 vorgesehen.

Der Schlitten 45 wird im Gestell 40 von an seinen seitlichen Tragarmen 51, 52 angreifenden Bewegungsorganen 56, 57 abwechselnd hin und her bewegt. Die an seinem linken, seitlichen Tragarm 51 angreifenden Bewegungsorgane 56 stützen sich im Gestell 40 an der linken, seitlichen Endwand 58 ab. Die an seinem rechten, seitlichen Tragarm 52 angreifenden Bewegungsorgane 57 stützen sich im Gestell 40 an der rechten, seitlichen Endwand 59 ab.

Am mittleren Tragarm 50 des Schlittens 45 ist eine langgestreckte Abdeckhaube 60 befestigt. Die Abdeckhaube 60 überdeckt die inneren Werkzeugleisten 48, 49 der beiden Quetschwerke 34, 35. Die Abdeckhaube 60 reicht bis zur Oberseite des Fallschachtes 39 und unterteilt diesen in jeweils einem Quetschwerk 34, 35 zugeordnete Teilschächte 39a, 39b. Die Oberseite der Abdeckhaube 60 ist zu den Teilschächten 39a, 39b hin abgeschrägt.

Der Schlitten 45 trägt zur Abdeckhaube 60 parallel verlaufende, vertikale Leibbleche 61, 62. Die Leibbleche 61, 62 begrenzen die Teilschächte 39a, 39b an ihrer Außenseite. Die Leibbleche 61, 62 sind an mit den Längsträgern 53, 54 des Schlittens 45 starr verbundenen Stäben 63, 64 befestigt, die parallel zur Längsrichtung der Quetschwerke 34, 35 angeordnet sind.

Der Schlitten 45 trägt an seinen Längsträgern 53, 54 angebrachte, den Stirnseiten der Teilschächte 39a, 39b zugeordnete Leitvorrichtungen 65, 66 für die Enden der Röhrchen R. Die Leitvorrichtungen 65, 66 sind an den Stirnseiten der Quetschwerke 34, 35 angeordnet. Jede Leitvorrichtung 65, 66 sieht ein endloses Band 67 vor. Dieses ist um den die Leitvorrichtung 65, 66 tragenden Längsträger 53, 54 des Schlittens 45 herumgeführt. Dem Band 67 ist ein Bandantrieb 68 und eine Bandspannvorrichtung 69 zugeordnet. Bandantrieb 68 und Bandspannvorrichtung 69 sind an der Außenseite des Längsträgers 53, 54 angebracht. Dem Band 67 kann auch eine an der Außenseite des Längsträgers 53, 54 angebrachte Bandreinigungsvorrichtung zugeordnet sein. Auf der Innenseite des Längsträgers 53, 54 ist das Band 67 über eine zum Längsträger 53, 54 parallele Umlenkwalze 65a, 66a geführt, die den stirnseitigen Enden der inneren Werkzeugleisten 48, 49 der Quetschwerke 34, 35 benachbart auf dem mittleren Tragarm 50 des Schlittens 45 angeordnet ist

Unter dem Gestell 40 ist ein umlaufendes Transportband 70 vorgesehen, das die aus den Quetschwerken 34, 35 nach unten herausfallenden, polsterförmigen Hohlkörper 36 auffängt und abtransportiert.

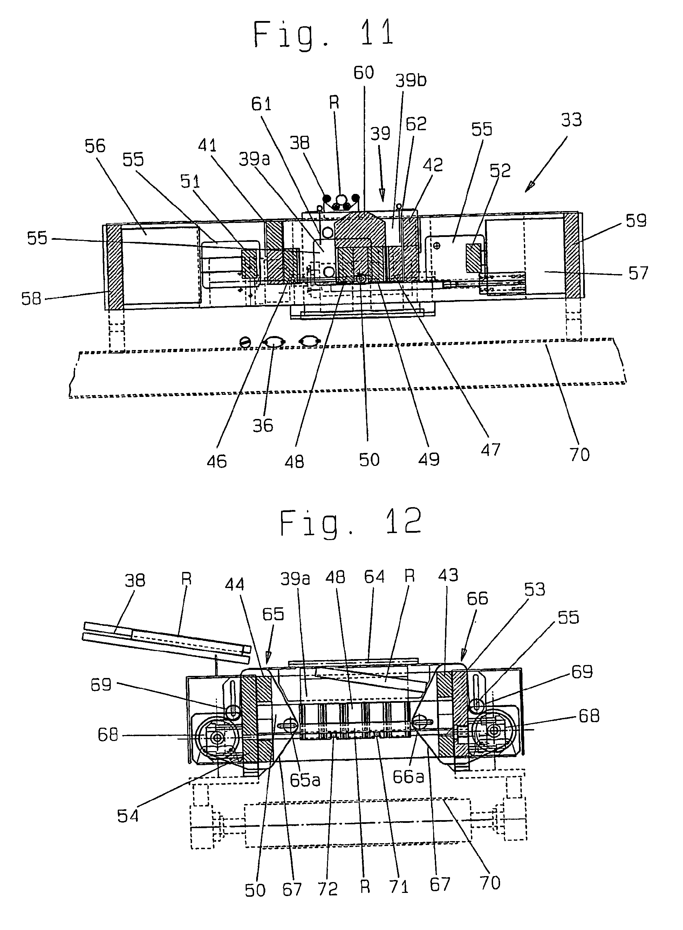

Die Fig. 10 und 11 zeigen die Quetschvorrichtung 33 mit nach rechts verschobenem Schlitten 45. In diesem Zustand der Quetschvorrichtung 33 sind die inneren Werkzeugleisten 48, 49 der beiden Quetschwerke 34, 35 und die im Fallschacht 39 angeordnete Abdeckhaube 60 zusammen mit dem mittleren Tragarm 50 des Schlittens 45 im Arbeitsbereich der Quetschvorrichtung 33 nach rechts verschoben. Das linke Quetschwerk 34 ist geöffnet. Das rechte Quetschwerk 35 ist geschlossen. Der linke Teilschacht 39a ist auf die Rutsche 38 ausgerichtet. Der rechte Teilschacht 39b wird von der Abdeckhaube 60 blockiert.

Ein über die Rutsche 38 zugeführtes Röhrchen R wird von der Abdeckhaube 60 in den linken Teilschacht 39a abgelenkt und fällt in das geöffnete, linke Quetschwerk 34, wo es von zwei unteren Tragarmen 71, 72 aufgefangen und beim Betätigen des Quetschwerks 34 in polsterförmige Hohlkörper 36 zerteilt wird, die nach unten auf das Transportband 70 fallen.

Zum Betätigen des linken Quetschwerks 34 werden die am rechten, seitlichen Tragarm 52 des Schlittens 45 angreifenden Bewegungsorgane 57 betätigt und der Schlitten 45 wird in den Fig. 10 und 11 nach links verschoben. Dabei werden die inneren Werkzeugleisten 48, 49 der beiden Quetschwerke 34, 35 und die im Fallschacht 39 angeordnete Abdeckhaube 60 zusammen mit dem mittleren Tragarm 50 des Schlittens 45 im Arbeitsbereich der Quetschvorrichtung 33 nach links verschoben. Im linken Quetschwerk 34 wird das auf den unteren Tragarmen 71, 72 liegende Röhrchen R von der am mittleren Tragarm 50 des Schlittens 45 verankerten, inneren Werkzeugleiste 48 nach links geschoben und gegen die am linken Rand des Quetschwerks 34 angeordnete, am Träger 41 des Gestells 40 befestigte, äußere Werkzeugleiste 46 geschoben. Beim rechten Quetschwerk 35 wird die innere Werkzeugleiste 49 von der am rechten Rand des Quetschwerks 35 angeordneten, am Träger 42 des Gestells 40 befestigten, äußeren Werkzeugleiste 47 nach links weggeschoben. Im Fallschacht 39 wird die Abdeckhaube 60 nach links verschoben.

Nach der Betätigung des linken Quetschwerks 34 ist der rechte Teilschacht 39b auf die Rutsche 38 ausgerichtet und die Abdeckhaube 60 blockiert den linken Teilschacht 39a.

Das nächste über die Rutsche 38 zugeführte Röhrchen R wird von der Abdeckhaube 60 in den rechten Teilschacht 39b abgelenkt und fällt in das geöffnete, rechte Quetschwerk 35, wo es von zwei unteren Tragarmen aufgefangen und beim Betätigen des Quetschwerks 35 in polsterförmige Hohlkörper 36 zerteilt wird, die nach unten auf das Transportband 70 fallen.

Zum Betätigen des rechten Quetschwerks 35 werden die am linken, seitlichen Tragarm 51 des Schlittens 45 angreifenden Bewegungsorgane 56 betätigt und der Schlitten 45 wird nach rechts in die in den Fig. 10 und 11 gezeigte Stellung verschoben. Dabei werden die inneren Werkzeugleisten 48, 49 der beiden Quetschwerke 34, 35 und die im Fallschacht 39 angeordnete Abdeckhaube 60 zusammen mit dem mittleren Tragarm 50 des Schlittens 45 im Arbeitsbereich der Quetschvorrichtung 33 nach rechts verschoben. Im rechten Quetschwerk 35 wird das auf den unteren Tragarmen liegende Röhrchen R von der am mittleren Tragarm 50 des Schlittens 45 verankerten, inneren Werkzeugleiste 49 nach rechts geschoben und gegen die am rechten Rand des Quetschwerks 35 angeordnete, am Träger 42 des Gestells 40 befestigte, äußere Werkzeugleiste 47 geschoben. Beim linken Quetschwerk 34 wird die innere Werkzeugleiste 48 von der am linken Rand des Quetschwerks 34 angeordneten, am Träger 41 des Gestells 40 befestigten, äußeren Werkzeugleiste 46 nach rechts weggeschoben. Im Fallschacht 39 wird die Abdeckhaube 60 nach rechts verschoben.

Nach der Betätigung des rechten Quetschwerks 35 ist wieder der linke Teilschacht 39a auf die Rutsche 38 ausgerichtet und die Abdeckhaube 60 blockiert wieder den rechten Teilschacht 39b.

Die Werkzeugleisten 46, 47, 48, 49 der beiden Quetschwerke 34, 35 tragen Quetschbacken mit geradlinigen, vertikal ausgerichteten Quetschkanten. Sie können gegen Werkzeugleisten mit anderen Quetschkanten oder gegen Werkzeugleisten mit anders ausgerichteten Quetschkanten ausgetauscht werden, um polsterförmige Hohlkörper mit anderen Endkanten zu erzeugen. Über den Austausch der Werkzeugleisten der Quetschwerke 34, 35 hinausgehende Änderungen der Quetschvorrichtung 33 sind dafür nicht erforderlich.

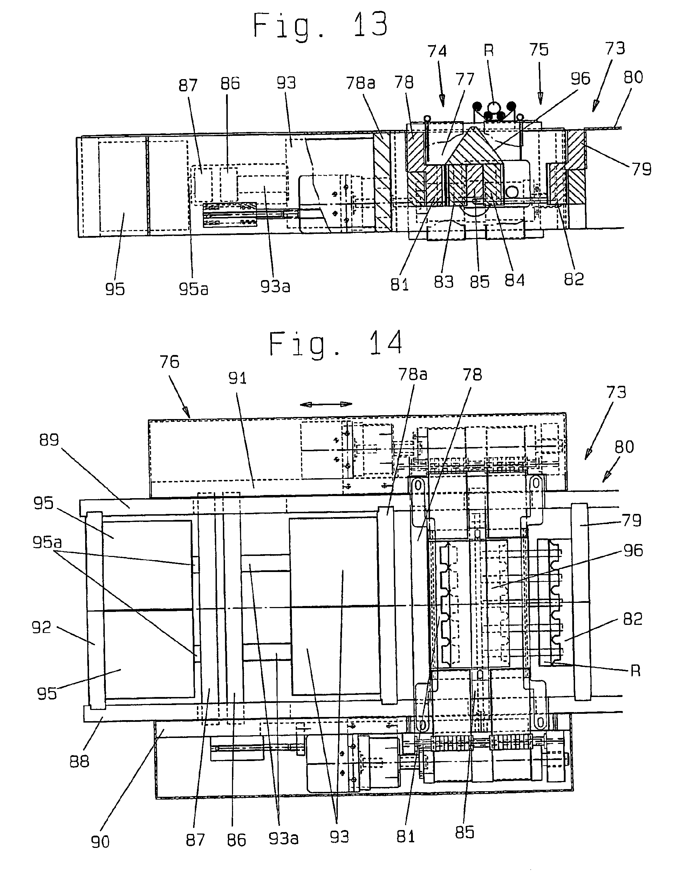

Die Fig. 13 und 14 zeigen eine weitere Vorrichtung, bei der plastisch verformbare Röhrchen R in Längsrichtung einer Quetschvorrichtung 73 zugeführt und in dieser in zwei langgestreckten, nebeneinanderliegenden Quetschwerken 74, 75 verarbeitet werden. In den Quetschwerken 74, 75 werden die Röhrchen R jeweils quer zu ihrer Längsrichtung durchtrennt und in polsterförmige Hohlkörper aufgeteilt. Die Quetschwerke 74, 75 werden von einem quer zu ihrer Längsrichtung hin und her bewegbaren Schlitten 76 abwechselnd betätig. Die Quetschvorrichtung 73 entspricht weitgehend der Quetschvorrichtung 33 der Fig. 10-12.

Bei der Quetschvorrichtung 73 liegt der Arbeitsbereich samt Fallschacht 77 zwischen zwei in Längsrichtung der Quetschwerke 74, 75 verlaufenden Trägern 78, 79 des Gestells 80. Diese Träger 78, 79 sind in der rechten Hälfte des Gestells 80 angeordnet. Sie tragen an ihren einander zugewandten Seiten die äußeren Werkzeugleisten 81, 82 der beiden Quetschwerke 74, 75. Die inneren Werkzeugleisten 83, 84 der Quetschwerke 74, 75 sind im Inneren des Arbeitsbereiches der Quetschvorrichtung 73 Rücken an Rücken angeordnet.

Die inneren Werkzeugleisten 83, 84 werden von einem zur Längsrichtung der Quetschwerke 74, 75 parallelen Tragarm 85 des Schlittens 76 getragen. Dieser Tragarm 85 ist in der rechten Hälfte des Schlittens 76 angeordnet. Der Schlitten 76 besitzt zwei in seiner linken Hälfte angeordnete und dort knapp nebeneinanderliegende, zur Längsrichtung der Quetschwerke 74, 75 parallele Tragarme 86, 87, an denen die den Schlitten 76 in Fig. 13 und 14 nach links bzw. nach rechts verschiebenden Arbeitszylinder angreifen.

Die Tragarme 85, 83, 87 des Schlittens 76 durchsetzen die Vorderwand 88 und die Rückwand 89 des Gestells 80. Sie sind Teil des Schlittentragrahmens und werden außerhalb des Gestells 80 durch quer zur Längsrichtung der Quetschwerke 74, 75 verlaufende Tragarme 90, 91 des Schlittens 76 miteinander verbunden.

Die beiden linken Tragarme 86, 87 des Schlittens 76 sind im Gestell 80 zwischen einer dem Träger 78 benachbarten, rechten Querwand 78a und der linken Endwand 92 angeordnet. Auf der linken Seite der rechten Gestellquerwand 78a sind zwei hydraulische Arbeitszylinder 93 angebracht, die den Schlitten nach links in die in Fig. 13 und 14 gezeigte Stellung verschieben. Diese Arbeitszylinder 93 greifen mit ihren Arbeitsstempeln 93a an rechten Seite des ersten, linken Tragarms 86 des Schlittens 76 an. An der rechten Seite der linken Gestellendwand 92 sind zwei hydraulische Arbeitszylinder 95 angebracht, die den Schlitten aus der in Fig. 13 und 14 gezeigten Stellung nach rechts verschieben. Die Arbeitszylinder 95 greifen mit ihren Arbeitsstempeln 95a an der linken Seite des zweiten, linken Tragarms 87 des Schlittens 76 an.

Im Arbeitsbereich der Quetschvorrichtung 73 ist über den beiden inneren Werkzeugleisten 83, 84 der Quetschwerke 74, 75 eine Abdeckhaube 96 mit konvexer bzw. giebelförmiger Oberseite angeordnet. Die Abdeckhaube 96 ist einstückig mit den beiden Werkzeugleisten 83, 84 ausgebildet. Werkzeugleisten 83, 84 und Abdeckhaube 96 bilden einen in langgestreckten Block, der rittlings auf dem zur Längsrichtung der Quetschwerke 74, 75 parallelen, rechten Tragarm 85 des Schlittens 76 sitzt. Dieser Block unterteilt den Fallschacht 77 in zwei Teilschächte. An den beiden, zur Längsrichtung der Quetschwerke 74, 75 parallelen Längsseiten dieses Blocks sind jeweils die in Längsrichtung aufeinanderfolgenden Quetschbacken der beiden inneren Werkzeugleisten 83, 84 angeordnet. Zum Reinigen oder Austauschen der inneren Werkzeugleisten 83, 84 wird lediglich der Block vom rechten Tragarm 85 des Schlittens 76 abgehoben und dann der gereinigte Block oder ein mit anderen Werkzeugleisten versehener Block auf den rechten Tragarm 85 des Schlittens 76 aufgesetzt.

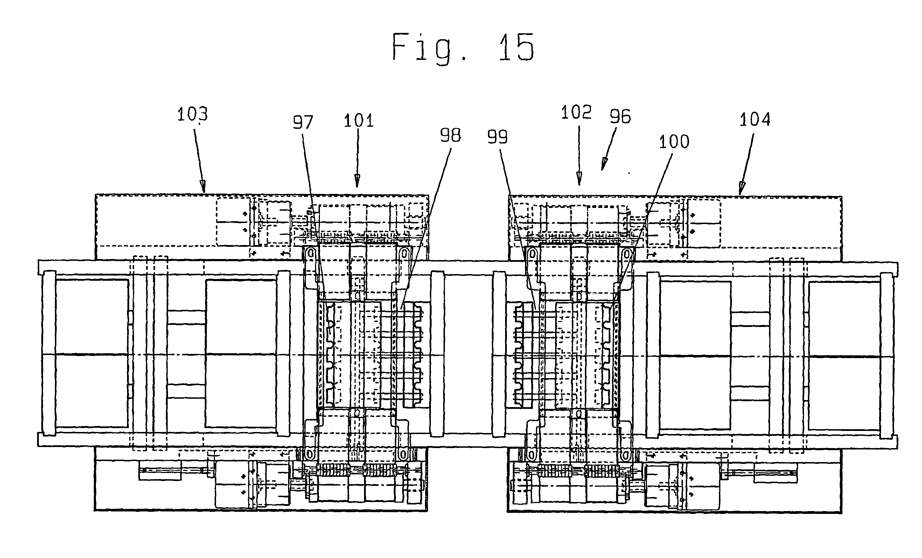

Fig. 15 zeigt eine weitere Vorrichtung zum Verarbeiten von plastisch verformbaren Röhrchen R zu polsterförmigen Hohlkörpern. Die Röhrchen werden in Längsrichtung einer Quetschvorrichtung 96 zugeführt, die vier langgestreckte Quetschwerke 97, 98, 99, 100 besitzt, in denen die Röhrchen jeweils quer zu ihrer Längsrichtung durchtrennt und in polsterförmige Hohlkörper aufgeteilt werden. Die Quetschvorrichtung 96 besitzt zwei mit etwas Abstand nebeneinanderliegende Arbeitsbereiche 101, 102, die in zwei zueinander spiegelbildlich ausgebildeten Abschnitten der Quetschvorrichtung 96 angeordnet sind. In jedem Arbeitsbereich 101 bzw. 102 sind zwei langgestreckte Quetschwerke 97, 98 bzw. 99, 100 quer zu ihrer Längsrichtung nebeneinander angeordnet. Jedem Arbeitsbereich 101 bzw. 102 ist ein quer zur Längsrichtung der Quetschwerke hin und her bewegbarer Schlitten 103 bzw. 104 zugeordnet, der die beiden Quetschwerke 97, 98 bzw. 99, 100 des jeweiligen Arbeitsbereiches 101 bzw. 102 abwechselnd betätigt. Der linke Abschnitt der Quetschvorrichtung 96 entspricht der Quetschvorrichtung der Fig. 13 und 14. Der rechte Abschnitt der Quetschvorrichtung 96 ist dazu spiegelbildlich ausgebildet. Die Schlitten 103, 104 der beiden Arbeitsbereiche 101, 102 werden unabhängig voneinander hin und her bewegt. Die beiden Schlitten 103, 104 können auch durch einen einzigen Schlitten ersetzt werden, der dann die linken Quetschwerke 97, 99 der beiden Arbeitsbereiche 101, 102 und die rechten Quetschwerke 98, 100 der beiden Arbeitsbereiche 101, 102 jeweils gleichzeitig betätigt.

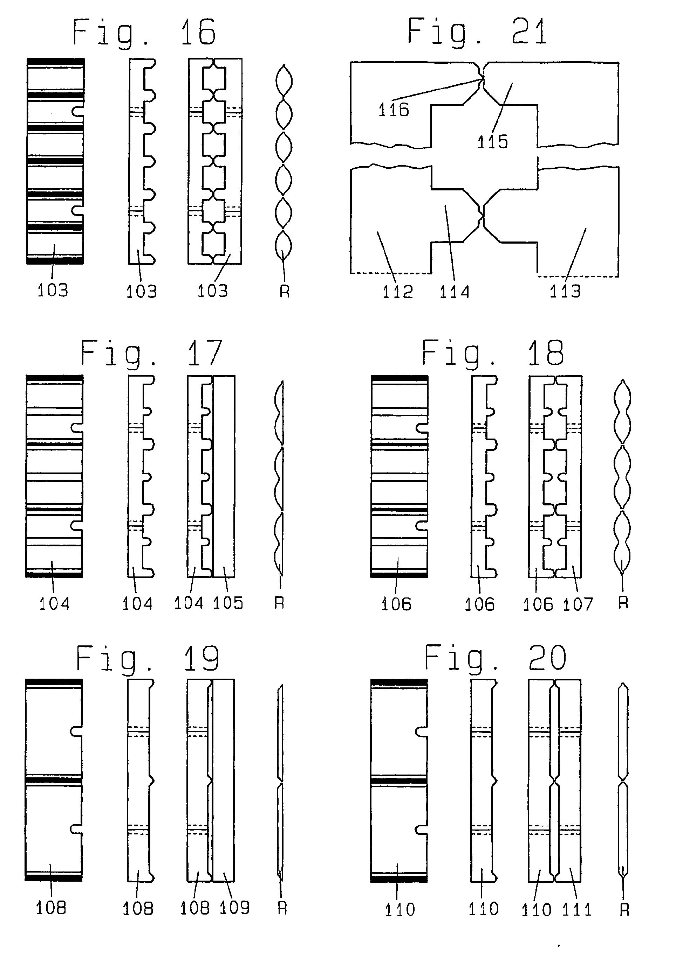

Die Figuren 16-20 zeigen verschiedene Werkzeugeinsätze für die Quetschwerke und die mit diesen Werkzeugeinsätzen aus einem Röhrchen R hergestellten, polsterförmigen Hohlkörper.

Fig. 16 zeigt einen Werkzeugeinsatz, der zwei einander gegenüberliegende, gleich ausgebildete Werkzeugleisten 103 vorsieht. Jede Werkzeugleiste 103 weist sieben im Abstand von einander angeordnete, senkrecht abstehende Quetschbacken auf. In einem mit diesem Werkzeugeinsatz bestückten Quetschwerk werden die Röhrchen in sechs polsterförmige Hohlkörper aufgeteilt.

Fig. 17 zeigt einen Werkzeugeinsatz, bei dem einer mit abstehenden Quetschbacken versehenen Werkzeugleiste 104 eine flache Werkzeugleiste 105 gegenüberliegt. Die Werkzeugleiste 104 trägt sieben im Abstand von einander angeordnete, senkrecht abstehende Quetschbacken, von denen jede zweite Quetschbacke etwas kürzer ausgebildet ist. In einem mit diesem Werkzeugeinsatz bestückten Quetschwerk werden die Röhrchen einseitig flachgedrückt und nur an jeder zweiten flachgedrückten Stelle zerteilt, sodass nur drei polsterförmige Hohlkörper entstehen.

Fig. 18 zeigt einen Werkzeugeinsatz mit zwei gleich ausgebildeten Werkzeugleisten 106, 107 mit jeweils sieben senkrecht abstehenden Quetschbacken, von denen aber nur jede zweite Quetschbacke das Röhrchen an der flachgedrückten Stelle zerteilt. In einem mit diesem Werkzeugeinsatz bestückten Quetschwerk entstehen aus jedem Röhrchen drei längliche polsterförmige Hohlkörper, die jeweils aus zwei an einer Quetschkante miteinander verbunden Polstern bestehen.

Fig. 19 zeigt einen Werkzeugeinsatz, bei dem einer Werkzeugleiste 108 mit drei abstehende Quetschbacken eine flache Werkzeugleiste 109 ohne abstehende Quetschbacken gegenüberliegt. Bei der Werkzeugleiste 108 sind die Quetschbacken in der Mitte und an den beiden Enden der Werkzeugleiste 108 angeordnet. In einem Quetschwerk, das mit diesem Werkzeugeinsatz bestückt ist, wird jedes Röhrchen mit einer Seite gegen die flache Werkzeugleiste 109 gedrückt, an beiden Enden durch eine Quetschkante verschlossen und in der Mitte zuerst örtlich flachgedrückt und dann an der flachgedrückten Stelle zerteilt, sodass aus ihm zwei polsterförmige Hohlkörper entstehen.

Fig. 20 zeigt einen weiteren Werkzeugeinsatz mit zwei gleich ausgebildeten Werkzeugleisten 110, 111. Bei beiden Werkzeugleisten 110, 111 stehen an beiden Enden und in der Mitte jeweils eine Quetschbacke senkrecht ab. In einem Quetschwerk, das mit diesem Werkzeugeinsatz bestückt ist, wird jedes Röhrchen in zwei jeweils an den Enden durch Quetschkanten verschlossene, polsterförmige Hohlkörper aufgeteilt.

Fig. 21 zeigt einen weiteren Werkzeugeinsatz, bei dem zwei Werkzeugleisten 112, 113 mit senkrecht abstehenden Quetschbacken 114, 115 einander gegenüberliegen. Die linke Werkzeugleiste trägt Quetschbacken 114, die mit einer ebenen Stirnseite und einer über diese vorstehenden Schneidkante 116 versehen sind. Die rechte Werkzeugleiste 113 trägt Quetschbacken 115, die mit einer ebenen Stirnseite versehen sind. In einem Quetschwerk, das mit diesem Werkzeugeinsatz bestückt ist, wird jedes Röhrchen zwischen den einander gegenüberliegenden Quetschbacken 114, 115 der Werkzeugleisten 112, 113 flachgedrückt und durch die von einer Quetschbacke 114 abstehende Schneidkante 116 an einer flachgedrückten Stelle durchtrennt.

## Patentansprüche

1. Vorrichtung zum gleichzeitigen Herstellen von mehreren polsterförmigen Hohlkörpern (13), die an entgegengesetzten Enden durch Quetschkanten begrenzt sind, wobei die Vorrichtung mit einem Gestell (5, 18, 40, 80), mit einer Zuführeinrichtung (1, 37) für in polsterförmige Hohlkörper (13) zu zerteilende Röhrchen (R) und mit einer im Gestell angeordneten, die Röhrchen (13) in polsterförmige Hohlkörper (13) zerteilenden Quetschvorrichtung (4, 19, 33, 73, 96) versehen ist, ***dadurch gekennzeichnet,* dass** die Zuführeinrichtung (1, 37) mit einem Fallschacht (3, 39, 77) versehen ist, der die Röhrchen (R) quer zu ihrer Längsrichtung der Quetschvorrichtung (4, 19, 33, 73, 96) zuführt, dass die Quetschvorrichtung (4, 19, 33, 73, 96) im Gestell (5, 18, 40, 80) unterhalb des Fallschachts (3, 39, 77) angeordnet ist und zumindest ein langgestrecktes Quetschwerk (6) oder zwei oder mehrere, nebeneinander angeordnete, langgestreckte Quetschwerke (20, 21; 34, 35; 74, 75; 97, 98, 99, 100) besitzt, dass das oder jedes Quetschwerk (6; 20, 21; 34, 35; 74, 75; 97, 98, 99, 100) der Längsrichtung der Röhrchen (R) zugeordnet ist und eine Reihe von in Längsrichtung der Röhrchen (R) hintereinander angeordneten Quetschwerkzeugen (7, 7') besitzt, und dass jedes Quetschwerkzeug (7, 7') eine im Gestell (5, 18, 40, 80) fixierte, stationäre Quetschbacke (8, 8', 24, 25) und eine dieser in Querrichtung gegenüberliegende, bewegliche Quetschbacke (9, 9', 26, 27) besitzt, die auf einem im Gestell (5, 18, 40, 80) in Querrichtung hin und her bewegbaren Schlitten (10, 28, 45, 76, 103, 104) angeordnet ist.

2. Vorrichtung nach Anspruch 1, ***dadurch gekennzeichnet,* dass** jedes Quetschwerk (6; 20, 21; 34, 35; 74, 75; 97, 98, 99, 100) zwei sich in Längsrichtung erstreckende und in Querrichtung einander gegenüberliegende Werkzeugeinsätze (14, 15; 24a, 26a; 25a, 27a; 46, 48; 47, 49; 81, 83; 84, 82) besitzt, von denen der eine Werkzeugeinsatz (14, 24a, 25a, 46, 47, 81, 82) die stationären Quetschbacken (8, 24, 25) der Quetschwerkzeuge des Quetschwerks (6; 20, 21; 34, 35; 74, 75; 97, 98, 99, 100) trägt und im Gestell (5, 18, 40, 80) fix verankert ist und der andere Werkzeugeinsatz (15, 26a, 27a, 48, 49, 83, 84) die beweglichen Quetschbacken (9, 26, 27) der Quetschwerkzeuge des Quetschwerks (6; 20, 21; 34, 35; 74, 75; 97, 98, 99, 100) trägt und im Gestell (5, 18, 40, 80) in Querrichtung verfahrbar angeordnet ist.

3. Vorrichtung nach Anspruch 1 oder 2, ***dadurch gekennzeichnet,* dass** bei einem Quetschwerk (6) in Längsrichtung aufeinanderfolgende Quetschwerkzeuge (7, 7') vorgesehen sind, bei denen die Quetschbacken (8, 9) von Quetschwerkzeug zu Quetschwerkzeug gegeneinander verdrehte Quetschkanten, vorzugsweise um 90° gegeneinander verdrehte Quetschkanten (8a, 8a', 9a, 9a') tragen.

4. Vorrichtung nach einem der Ansprüche 1-3, ***dadurch gekennzeichnet,* dass** eine Quetschvorrichtung mit zwei langgestreckten, in Querrichtung nebeneinander angeordneten und durch einen In Querrichtung vertahrbaren Schlitten gleichzeitig betätigbaren Quetschwerken vorgesehen ist, wobei die beweglichen Quetschbacken des einen Quetschwerks im Inneren der Quetschvorrlchtung Rücken an Rücken mit den stationären Quetschbacken des anderen Quetschwerks angeordnet und die beweglichen Quetschbacken beider Quetschwerke am Schlitten angeordnet sind.

5. Vorrichtung nach einem der Ansprüche 1-3, ***dadurch gekennzeichnet,* dass** eine Quetschvorrichtung (19, 33, 73) mit zwei langgestreckten, in Querrichtung nebeneinander angeordneten und durch einen in Querrichtung verfahrbaren Schlitten (23, 45, 76) abwechselnd betätigbaren Quetschwerken (20, 21; 34, 35; 74, 75) vorgesehen ist, wobei die beweglichen Quetschbacken beider Quetschwerke (20, 21; 34, 35; 74, 75) im inneren der Quetschvorrichtung (19, 33, 73) Rücken an Rücken angeordnet und am Schlitten (28, 45, 76) verankert sind und die den beweglichen Quetschbacken gegenüberlieget stationären Quetschbacken der beiden Quetschwerke (20, 21; 34, 35; 74, 75) im Gestell (18, 40, 80) der Quetschvorrichtung (19, 33, 73) verankert sind.

6. Vorrichtung nach Anspruch 5, ***dadurch gekennzeichnet,* dass** die beiden Quetschwerke (20, 21; 34, 35; 74, 75) der Quetschvorrichtung (19, 33, 73) jeweils zwel langgestreckte, in Querrichtung einander gegenüberliegende Werkzeugeinsätze (24a, 26a; 25a, 27a; 46, 48; 47, 49; 81, 83; 84, 82) besitzen, wobei für die stationären Quetshbacken der Quetschwerke (20, 21; 34, 35; 74, 75) im Gestell (18, 40, 80) verankerte, Werkzeugeinsätze (24a, 25a, 46, 47, 81, 82) und für die bewegliche Quetschbacken der Quetschwerke (20, 21; 34, 35; 74, 75) am Schlitten (28, 45, 76) verankerte, innere Werkzeugeinsätze (26a, 27a, 48, 49, 83, 84) vorgesehen sind.

7. Vorrichtung nach Anspruch 5 oder 6, ***dadurch gekennzeichnet,* dass** der in Querrichtung verfahrbare Schlitten (45, 76) eine Abdeckhaube (60, 94) trägt, die den Fallschacht (39, 77) der Quetschvorrichtung (33,73) in zwei, in Querrichtung nebeneinanderliegende Teilschächte (39a, 39b) unterteilt.

8. Vorrichtung nach einem der Ansprüche 1-6, ***dadurch gekennzeichnet,* dass** bei jedem Quetschwerk (6) eine diesem zugeordnet Abdeckung vorgesehen ist, die einen im Gestell (5) verankerten, stationären Abdeckteil (16) für die stationären Quetschbacken (8) des Quetschwerks (6) und einen in Querrichtung bewegbaren Abdeckteil (17) für die beweglichen Quetschbacken (9) des Quetschwerks (6) vorsieht, wobei zwischen den beiden Abdeckteilen (16, 17) des Quetschwerks (6) ein Eintrittsschlitz für die Röhrchen (R) angeordnet ist.

9. Vorrichtung nach Anspruch 5 oder 6, ***dadurch gekennzeichnet,* dass** für die beiden nebenelnander angeordneten, durch einen in Querrichtung verfahrbaren Schlitten (28) abwechselnd betätigbaren Quetschwerke (20, 21) eine Abdeckung vorgesehen ist, die im Gestell (18) verankerte, seitliche Abdeckteile (30, 31) für die stationären Quetschbacken (24, 25) der beiden Quetschwerke (20, 21) und einen zwischen den seitlichen Abdeckteilen (30, 31) angeordneten, am Schlitten (28) verankerten, eine konvexe oder glebelförmige Oberselte aufweisenden, mittleren Abdeckteil (32) für die am Schlitten (28) verankerten Quetschbacken (26, 27) der beiden Quetschwerke (20, 21) vorsieht, wobei bel jedem Quetschwerk (20, 21) zwischen dem seitlichen Abdeckteil (30, 31) und dem mittieren Abdeckteil (32) ein Eintrittsschlitz für die Röhrchen (R) angeordnet ist.

10. Vorrichtung nach einem der Ansprüche 1-9, ***dadurch gekennzeichnet,* dass** der die Röhrchen (R) quer zu ihrer Längsrichtung einer Quetschvorrichtung (4 19, 33, 73, 96) zuführende Fallschacht (39, 77) an zumindest einer seiner Stirnseiten durch eine den Enden der Röhrchen (R) zugeordnete Leitvorrichtung (65, 66) begrenzt ist.

11. Vorrichtung nach Anspruch 10, ***dadurch gekennzeichnet,* dass** jede Leitvorrichtung (65, 66) an einer in Querrichtung verlaufenden Stirnwand des Fallschachtes (39, 77) angebracht ist und ein endloses Band (67) besitzt, das um diese Stirnwand des Fallschachtes (39, 77) herumgeführt ist und den Fallschacht (39, 77) stirnseitig begrenzt.

12. Vorrichtung nach Anspruch 11, ***dadurch gekennzeichnet,* dass** die Leitvorrichtung (65, 66) als Abstreifeinrichtung ausgebildet ist, bei der ein umlaufendes, endloses Band (67) aus den Enden der Röhrchen (R) austretende Füllmasse abstreift und einer außerhalb des Fallschachtes (39, 77) angeordneten Bandreinigungsvorrichtung zuführt.

13. Vorrichtung nach einem der Ansprüche 1-12, ***dadurch gekennzeichnet,* dass** beheizbare Quetschwerkzeuge vorgesehen sind, bei denen zumindest die stationären Quetschbacken vorzugsweise elektrisch beheizbar sind.

14. Vorrichtung nach einem der Ansprüche 1-12, ***dadurch gekennzeichnet,* dass** bei jedem Quetschwerk ein über den Quetschwerkzeugen angeordneter Infrarotstrahler zum Beheizen der Quetschwerkzeuge vorgesehen ist.

## Claims

1. A device for simultaneously producing a plurality of cushion-shaped hollow bodies (13) that are delimited at opposite ends by crimped edges, wherein the device is provided with a frame (5, 18, 40, 80), with a feed device (1, 37) for small tubes (R) that are to be divided into cushion-shaped hollow bodies (13), and with a crimping device (4, 19, 33, 73, 96) that is arranged in the frame and divides the small tubes (13) into cushion-shaped hollow bodies (13), ***characterised in that*** the feed device (1, 37) is provided with a drop shaft (3, 39, 77) that feeds the small tubes (R) transversely to their longitudinal direction to the crimping device (4, 19, 33, 73, 96), **in that** the crimping device (4, 19, 33, 73, 96) is arranged in the frame (5, 18, 40, 80) below the drop shaft (3, 39, 77) and has at least one elongated crimping mechanism (6) or two or more elongated crimping mechanisms (20, 21; 34, 35; 74, 75; 97, 98, 99, 100) arranged side by side, **in that** the or each crimping mechanism (6; 20, 21; 34, 35; 74, 75; 97, 98, 99, 100) is coordinated with the longitudinal direction of the small tubes (R) and has a row of crimping tools (7, 7') arranged one after the other in the longitudinal direction of the small tubes (R), and **in that** each crimping tool (7, 7') has a stationary crimping jaw (8, 8', 24, 25) fixed in the frame (5, 18, 40, 80) and a movable crimping jaw (9, 9', 26, 27) lying opposite the latter in the transverse direction and arranged on a slide (10, 28, 45, 76, 103, 104) that can be moved to and fro in the transverse direction in the frame (5, 18, 40, 80).

2. A device according to claim 1, ***characterised in that*** each crimping mechanism (6; 20, 21; 34, 35; 74, 75; 97, 98, 99, 100) has two tool inserts (14, 15; 24a, 26a; 25a, 27a; 46, 48; 47, 49; 81, 83; 84, 82) that extend in the longitudinal direction and lie opposite each other in the transverse direction, of which the one tool insert (14, 24a, 25a, 46, 47, 81, 82) bears the stationary crimping jaws (8, 24, 25) of the crimping tools of the crimping mechanism (6; 20, 21; 34, 35; 74, 75; 97, 98, 99, 100) and is fixedly anchored in the frame (5, 18, 40, 80) and the other tool insert (15, 26a, 27a, 48, 49, 83, 84) bears the movable crimping jaws (9, 26, 27) of the crimping tools of the crimping mechanism (6; 20, 21; 34, 35; 74, 75; 97, 98, 99, 100) and is arranged in the frame (5, 18, 40, 80) in such a way that it can be moved in the transverse direction.

3. A device according to claim 1 or 2, ***characterised in* that** in one crimping mechanism (6) there are provided crimping tools (7, 7') that follow one another in the longitudinal direction and in which the crimping jaws (8, 9) bear crimping edges that are turned with respect to each other from crimping tool to crimping tool, preferably crimping edges (8a, 8a', 9a, 9a') that are turned with respect to each other by 90°.

4. A device according to one of claims 1-3, ***characterised in that*** a crimping device is provided that has two elongated crimping mechanisms that are arranged side by side in the transverse direction and can be actuated simultaneously by a slide that can be moved in the transverse direction, wherein the movable crimping jaws of the one crimping mechanism are arranged in the interior of the crimping device back to back with the stationary crimping jaws of the other crimping mechanism, and the movable crimping jaws of both crimping mechanisms are arranged on the slide.

5. A device according to one of claims 1-3, ***characterised in that*** a crimping device (19, 33, 73) is provided that has two elongated crimping mechanisms (20, 21; 34, 35; 74, 75) that are arranged side by side in the transverse direction and can be actuated alternately by means of a slide (28, 45, 76) that can be moved in the transverse direction, wherein the movable crimping jaws of both crimping mechanisms (20, 21; 34, 35; 74, 75) are arranged in the interior of the crimping device (19, 33, 73) back to back and are anchored on the slide (28, 45, 76), and the stationary crimping jaws of the two crimping mechanisms (20, 21; 34, 35; 74, 75) lying opposite the movable crimping jaws are anchored in the frame (18, 40, 80) of the crimping device (19, 33, 73).

6. A device according to claim 5, ***characterised in that*** the two crimping mechanisms (20, 21; 34, 35; 74, 75) of the crimping device (19, 33, 73) in each case have two elongated tool inserts (24a, 26a; 25a, 27a; 46, 48; 47, 49; 81, 83; 84, 82) that lie opposite each other in the transverse direction, wherein outer tool inserts (24a, 25a, 46, 47, 81, 82) that are anchored in the frame (18, 40, 80) are provided for the stationary crimping jaws of the crimping mechanisms (20, 21; 34, 35; 74, 75), and inner tool inserts (26a, 27a, 48, 49, 83, 84) that are anchored on the slide (28, 45, 76) are provided for the movable crimping jaws of the crimping mechanisms (20, 21; 34, 35; 74, 75).

7. A device according to claim 5 or 6, ***characterised in that*** the slide (45, 76) that can be moved in the transverse direction bears a covering hood (60, 94) that subdivides the drop shaft (39, 77) of the crimping device (33, 73) into two partial shafts (39a, 39b) that lie side by side in the transverse direction.

8. A device according to one of claims 1-6, ***characterised in that*** provided in the case of each crimping mechanism (6) there is a cover that is coordinated with the latter and which provides a stationary cover portion (16), anchored in the frame (5), for the stationary crimping jaws (8) of the crimping mechanism (6) and a cover portion (17), movable in the transverse direction, for the movable crimping jaws (9) of the crimping mechanism (6), wherein an entry slot for the small tubes (R) is arranged between the two cover portions (16, 17) of the crimping mechanism (6).

9. A device according to claim 5 or 6, ***characterised in* that** provided for the two crimping mechanisms (20, 21) that are arranged side by side and can be actuated alternately by means of a slide (28) that can be moved in the transverse direction there is a cover that provides lateral cover portions (30, 31), anchored in the frame (18), for the stationary crimping jaws (24, 25) of the two crimping mechanisms (20, 21) and a central cover portion (32), arranged between the lateral cover portions (30, 31) and anchored on the slide (28) and having a convex or gable-shaped upper side, for the crimping jaws (26, 27), anchored on the slide (28), of the two crimping mechanisms (20, 21), wherein in the case of each crimping mechanism (20, 21) an entry slot for the small tubes (R) is arranged between the lateral cover portion (30, 31) and the central cover portion (32).

10. A device according to one of claims 1-9, ***characterised in that*** the drop shaft (39, 77) that feeds the small tubes (R) transversely to their longitudinal direction to a crimping device (4, 19, 33, 73, 96) is delimited on at least one of its front sides by a directing device (65, 66) that is coordinated with the ends of the small tubes (R).

11. A device according to claim 10, ***characterised in that*** each directing device (65, 66) is fitted on a front wall of the drop shaft (39, 77) extending in the transverse direction and has a continuous band (67) which is guided around this front wall of the drop shaft (39, 77) and delimits the drop shaft (39, 77) on the front side.

12. A device according to claim 11, ***characterised in that*** the directing device (65, 66) is formed as a stripping device in which a rotating continuous band (67) strips filling mass emerging from the ends of the small tubes (R) and feeds it to a band-cleaning device that is arranged outside the drop shaft (39, 77).

13. A device according to one of claims 1-12, ***characterised in that*** heatable crimping tools are provided in which at least the stationary crimping jaws can be heated, preferably electrically.

14. A device according to one of claims 1-12, ***characterised in that*** provided in the case of each crimping mechanism there is an infrared radiator that is arranged above the crimping tools to heat the crimping tools.

## Revendications

1. Dispositif de production simultanée de plusieurs corps (13) creux en forme de coussins, qui sont délimités à des extrémités opposées par des bords de pincement, dans lequel le dispositif est doté d'un bâti (5, 18, 40, 80), d'un dispositif (1, 37) d'apport de petits tubes (R) à subdiviser en corps (13) creux en forme de coussins et d'un dispositif (4, 19, 33, 73, 96), monté dans le bâti, de pincement, subdivisant les petits tubes (13) en des corps (13) creux en forme de coussins, **caractérisé en ce que** le dispositif (1, 37) d'apport est doté d'un puits (3, 39, 77) de chute, qui apporte les petits tubes (R) transversalement à sa direction longitudinale au dispositif (4, 19, 33, 73, 96) de pincement, **en ce que** le dispositif (4, 19, 33, 73, 96) de pincement est monté dans le bâti (5, 18, 40, 80) en dessous du puits (3, 39, 77) de chute et a au moins un équipement (6) de pincement oblong ou deux ou plusieurs postes (20, 21, 34, 35, 74, 75, 97, 98, 99, 100) de pincement oblongs disposés les uns à côté des, **en ce que** le ou chaque poste (6, 20, 21, 34, 35, 74, ,75, 97, 98, 99, 100) est associé à la direction longitudinale des petits tubes (R) et a une rangée d'outils (7, 7') de pincement disposés les uns dernière les autres dans la direction longitudinale des petits tubes (R) et **en ce que** chaque outil (7, 7') de pincement a une mâchoire (8, 8', 24, 25) de pincement fixe immobilisée dans le bâti (5, 18, 40, 80) et une mâchoire (9, 9', 26, 27) de pincement mobile, opposée dans la direction transversale et montée sur un chariot (10, 28, 45, 76, 103, 104) allant et venant dans la direction transversale dans le bâti (5, 18, 40, 80).

2. Dispositif suivant la revendication 1, **caractérisé en ce que** chaque poste (6 ; 20, 21 ; 34, 35 ; 74, 75 ; 97, 98, 99, 100) de pincement a deux outils (14, 15 ; 24a, 26a ; 25a , 27a ; 46, 48 ; 47, 49 ; 81, 83 ; 84, 82) rapportés s'étendant dans la direction longitudinale et opposés dans la direction transversale, dont l'un (14, 24a, 25a, 46,47, 81,82) porte les mâchoires (8, 24, 25) de pincement fixes des outils de pincement du poste (6 ; 20, 21 ; 34, 35 ; 74, 75 ; 97, 98, 99, 100) de pincement et est ancré de manière fixe dans le bâti (5, 18, 40, 80), tandis que l'autre outil (15, 26a, 27a, 48, 49, 83, 84) rapporté porte les mâchoires (9, 26, 27) de pincement mobiles des outils de pincement du poste (6 ; 20, 21 ; 34, 35 ; 74, 75 ; 97, 98, 99, 100) de pincement et est monté mobile dans la direction transversale dans le bâti (5, 18, 40, 80).

3. Dispositif suivant la revendication 1 ou 2, **caractérisé en ce qu'**il est prévu, pour un poste (6) de pincement, des outils (7, 7') de pincement qui se succèdent dans la direction longitudinale et dans lesquels les mâchoires (8, 9) de pincement portent des bords de pincement tournés l'un par rapport à l'autre d'un outil de pincement à l'autre, de préférence des bords (8a, 8a' , 9a, 9a') tournés l'un par rapport à l'autre de 90°.

4. Dispositif suivant l'une des revendications 1 à 3, **caractérisé en ce qu'**il est prévu un dispositif de pincement ayant deux postes de pincement s'étendant en longueur disposés l'un à côté de l'autre dans la direction transversale et pouvant être actionnés simultanément par un chariot mobile dans la direction transversale, les mâchoires de pincement mobiles de l'un des postes de pincement étant disposées à l'intérieur du dispositif de pincement dos-à-dos avec les mâchoires de pincement fixes de l'autre poste de pincement et les mâchoires de pincement mobiles des deux postes de pincement étant disposées sur le chariot.

5. Dispositif suivant l'une des revendications 1 à 3, **caractérisé en ce qu'**il est prévu un dispositif (19, 33, 73) de pincement ayant deux postes (20, 21 ; 34, 35 ; 74, 75) s'étendant en longueur disposés l'un à côté de l'autre dans la direction transversale et pouvant être actionnés en alternance par un chariot (28, 45 76) pouvant se déplacer dans la direction transversale, dans lequel les mâchoires de pincement de deux postes (20, 21 ; 34, 35 ; 74, 75) de pincement sont disposées à l'intérieur du dispositif (19, 33, 73) de pincement dos-à-dos et sont ancrées sur le chariot (28, 45, 76) et les mâchoires de pincement fixes, opposées aux mâchoires de pincement mobiles, des deux postes (20, 21 ; 34, 35 ; 74, 75) de pincement sont ancrées dans le bâti (18, 40, 80) du dispositif (19, 33, 73) de pincement.

6. Dispositif suivant la revendication 5, **caractérisé en ce que** les deux postes (20, 21 ; 34, 35 ; 74, 75) de pincement du dispositif (19, 33, 73) de pincement ont respectivement deux outils (24a, 26a ; 25a, 27a ; 46, 48 ; 47, 49 ; 81, 83 ; 84, 82) rapportés s'étendant en longueur et opposés l'un à l'autre dans la direction transversale, dans lequel il est prévu, pour les mâchoires de pincement fixes des postes (20, 21 ; 34, 35 ; 74, 75) de pincement, des outils (24a, 25a, 46, 47, 81, 82) rapportés extérieurs et ancrés dans le bâti (18, 40, 80) et, pour les mâchoires de pincement mobiles des postes (20, 21 ; 24, 25 ; 74, 75) de pincement, des outils (26a, 27a, 48, 49, 83, 84) rapportés intérieurs et ancrés sur le chariot (28, 45, 76).

7. Dispositif suivant la revendication 5 ou 6, **caractérisé en ce que** le chariot (45, 76), qui peut se déplacer dans la direction transversale, porte une hotte (60, 94) de recouvrement, qui subdivise le puits (39, 77) de chute du dispositif (33, 73) de pincement en deux sous-puits (39a, 39b) côte à côte dans la direction transversale.

8. Dispositif suivant l'une des revendications 1 à 6, **caractérisé en ce qu'**il est prévu, pour chaque poste (6) de pincement, un recouvrement qui lui est associé et qui prévoit une partie (16) de recouvrement fixe ancré dans le bâti (5), pour les mâchoires (8) de pincement fixes du poste (6) de pincement, et une partie (17) de recouvrement mobile dans la direction transversale, pour les mâchoires (9) de pincement mobiles du poste (6) de pincement, une fente d'introduction des petits tubes (R) étant disposée entre les deux parties (16, 17) de recouvrement du poste (6) de pincement.

9. Dispositif suivant la revendication 5 ou 6, **caractérisé en ce qu'**il est prévu, pour les deux postes (20, 21) de pincement, qui sont disposés l'un à côté de l'autre et qui peuvent être actionnés en alternance par un chariot (28) pouvant être déplacé dans la direction transversale, un recouvrement, qui prévoit des parties (30, 31) de recouvrement latérales ancrées dans le bâti (18) pour les mâchoires (24, 25) de pincement fixes des deux postes (20, 21) de pincement et une partie (32) de recouvrement médiane disposée entre les parties (30, 31) latérales ancrées sur le chariot (28) et ayant un côté supérieur convexe ou en forme de pignon pour les mâchoires (26, 27) de pincement ancrées sur le chariot (28) des deux postes (20, 21) de pincement, dans lequel, pour chaque poste (20, 21) de pincement, une fente d'introduction des petits tubes (R) est disposée entre la partie (30, 31) de recouvrement latérale et la partie (32) de recouvrement médiane.

10. Dispositif suivant l'une des revendications 1 à 9, **caractérisé en ce que** le puits (39, 77) de chute amenant les petits tubes (R) transversalement à leur direction longitudinale à un dispositif (4, 19, 33, 73, 96) de pincement est délimité sur au moins l'un de ses côtés frontaux par un dispositif (65, 66) de guidage associé aux extrémités des petits tubes (R).

11. Dispositif suivant la revendication 10, **caractérisé en ce que** chaque dispositif (65, 66) de guidage est mis sur une paroi frontale, s'étendant dans la direction transversale, du puits (39, 77) de chute et a une bande (67) sans fin, qui est guidée autour de cette paroi frontale du puits (39, 77) de chute et qui délimite du côté frontal le puits (39, 77) de chute.

12. Dispositif suivant la revendication 11, **caractérisé en ce que** le dispositif (65, 66) de guidage est constitué en dispositif d'enlèvement, dans lequel une bande (67) sans fin et faisant le tour enlève une composition de remplissage sortant des extrémités des petits tubes (R) et l'envoie à un dispositif de nettoyage de bande disposé à l'extérieur du puits (39, 77) de chute.

13. Dispositif suivant l'une des revendications 1 à 12, **caractérisé en ce qu'**il est prévu des outils de pincement, qui peuvent être chauffés et dans lesquels au moins les mâchoires de pincement fixes peuvent être fixées, de préférence électriquement.

14. Dispositif suivant l'une des revendications 1 à 12, **caractérisé en ce qu'**il est prévu, pour chaque poste de pincement, pour chauffer les outils de pincement, une source de rayons infrarouges disposée au-dessus des outils de pincement.
